# EUROPEAN PATENT SPECIFICATION

(11) **EP 0 312 203 B1**
(45) Date of publication and mention of the grant of the patent: **21.04.1993**
(21) Application number: 88308139.0
(22) Date of filing: 02.09.1988
(51) Int. Cl.: B29C 49/24, B29C 69/00, B65D 5/42

(54) **A method of making a laminated tubular body**
Herstellungsverfahren eines rohrförmigen laminierten Körpers
Méthode de réalisation d'un corps tubulaire laminé

(30) Priority: 15.10.1987 AU 4901/87; 03.02.1988 AU 6552/87
(43) Date of publication of application: 19.04.1989
(73) Proprietor: IMPACT INTERNATIONAL PTY. LTD., Smithfield New South Wales 2164 (AU)
(72) Inventor: Lajovic, Dusan Sava, Smithfield, New South Wales 2164 (AU)
(74) Representative: Smith, Norman Ian

(56) References cited:
- EP-A- 0 225 677
- DE-A- 3 336 269
- DE-B- 1 178 582
- FR-A- 2 434 326
- GB-A- 1 047 338
- US-A- 2 872 760
- US-A- 3 221 943
- US-A- 3 395 623

## Description

This invention concerns a method of continuously forming laminated tubular body, a laminated tubular body formed in accordance with the method apparatus for continuously forming a laminated tubular body. In particular the invention relates to laminated tubular bodies which have an extruded inner layer inflated to contact the inner surface of an outer layer.

FR-A-2434326, upon which the preambles of claims 1 and 18 are based, discloses a composite pipe comprising an aluminium sleeve with an adherent plastic lining. The pipe is for use in domestic hot water systems.

DE-B-1178582 relates to a pipe for handling corrosive materials. In particular, it relates to lining a metal pipe, having a lateral branch, with PTFE.

EP-A-0225677 discloses a composite BIB container formed by blow moulding a plastic inner bag inside a cardboard outer box to form the container. The outer box has an aperture in its top end panel; a heated plastic preform is inserted into the box via the aperture; and gas is injected into the preform to expand the preform into a thin walled bag within the box. The BIB container includes a window for viewing the product and means for gripping the container.

The preambles of the first and second aspects of the present invention are based on FR-A-2434326.

According to a first aspect of the present invention there is provided a method of continuously forming a tubular body having an inner surface and an outer surface, extruding a hollow plastics lining member within said tubular body, expanding the hollow lining member within the tubular body to form a substantially continuous lining characterised in that the sheet material is flexible and at least partially resilient and in that external and internal pressure are simultaneously applied to bring the inner lining into sealing engagement with said inner surface, thereby continuously forming a laminated tubular body, and cutting the continuously formed laminated tubular body into preselected lengths.

Preferably the strips of material originate from a continuous supply from which they are cut immediately prior to being drawn around the spaced apart portions of the hollow member. In other embodiments they are formed into tubular bodies prior to being cut and then subsequently moved into engagement with the hollow member.

Also preferably the tubes of the inflated hollow member which connect each tubular body are gathered and sealed to form a series of individual sealed laminated tubular bodies. The individual sealed bodies may then be separated to form bodies sealed at neither, one, or both ends.

Preferably the hollow member is extruded at a speed slower than that which the strips of material are moved so that a longitudinal stretch is introduced into the extruded member as it is inflated and applied to each body.

The laminated bodies produced by this process may be filled at the same time, or very shortly after the hollow member 17 is inflated, by means of a filling nozzle positioned through the extrusion die. In this way individually sealed and filled containers may be produced in one process. Such containers would be pilfer-proof insofar as any attempt to access the contents would be immediately apparent as a result of damage to the integrity of the continuous extruded member envelope.

In some preferred embodiments the strips of material are shaped or cut such that the tubular bodies produced are penetrated by at least one aperture. The apertures may of course be used to create an inspection window, gripping protuberances or a nozzle, or any combination of such features.

Also preferably a transparent panel is attached over the top of one or more apertures before the hollow member is inflated, and when the hollow member is inflated it is applied to the interior surface of the panel.

Also preferably there are a plurality of apertures and the hollow member is inflated to such an extent that it extends through the plurality of apertures to form a series of projections on the outer surface of the tubular body.

Also preferably the hollow member is inflated to extend through an aperture and form a spout. The formation of a spout in this way is highly advantageous insofar as it obviates the need for a separate spout-forming process step. Advantageously a mould for the spout is releasably secured to the exterior of the strip of material in the region of the hole to form the spout. If desired relatively low, or negative, pressure may be applied to the mould to assist in the flow of the hollow member into the mould. In a preferred embodiment a tab is positioned in the mould before the extruded member is inflated, so that on formation of the spout the tab may be pressure welded to its extremity.

Preferably a filling passage is provided through the centre of the extrusion die to enable the container to be filled as soon as it is formed. The container may be sealed immediately after filling, thus ensuring that contamination during transport and further handling does not take place.

The strip of material may have straight longitudinal edges or serrated edges and it may be formed into a tubular body in order to form, in the finished product, a substantially straight longitudinal seam or a spiral one. The material itself, which may comprise several layers, may be plastics, cardboard, metal or any other material. The hollow member may have barrier, adhesive, scaling, welding or other properties as desired. The finished laminated tubular bodied may be further processed to make containers, for instance laminated paper or metal foil containers for milk, laminated plastics containers for salt, or laminated metal containers for fruit.

In a second aspect the invention provides an apparatus as set out in claim 18.

The invention will now be described by way of example with reference to the accompanying drawings in which:-
figure 1a illustrates an apparatus for use in a method embodying the second aspect of the invention;
figure 1b illustrates a portion of an alternative apparatus for use in a method embodying the second aspect of the invention;
figure 1c illustrates a portion of the apparatus of figure 1a in greater detail;
figure 1d illustrates a portion of an alternative apparatus for use in a method embodying the second aspect of the present invention;
figure 1e illustrates a portion of an alternative apparatus for use in the method embodying the second aspect of the present invention;
figure 1f illustrates a portion of an alternative of an apparatus for use in a method embodying the second aspect of the present invention;
figure 2 illustrates a strip of material for use in a method embodying the second aspect of the invention;

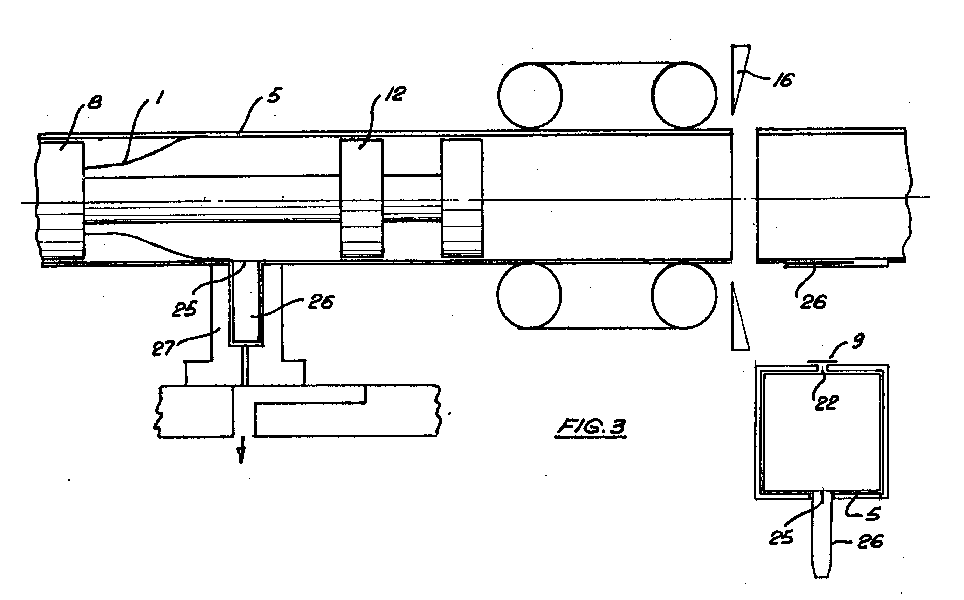

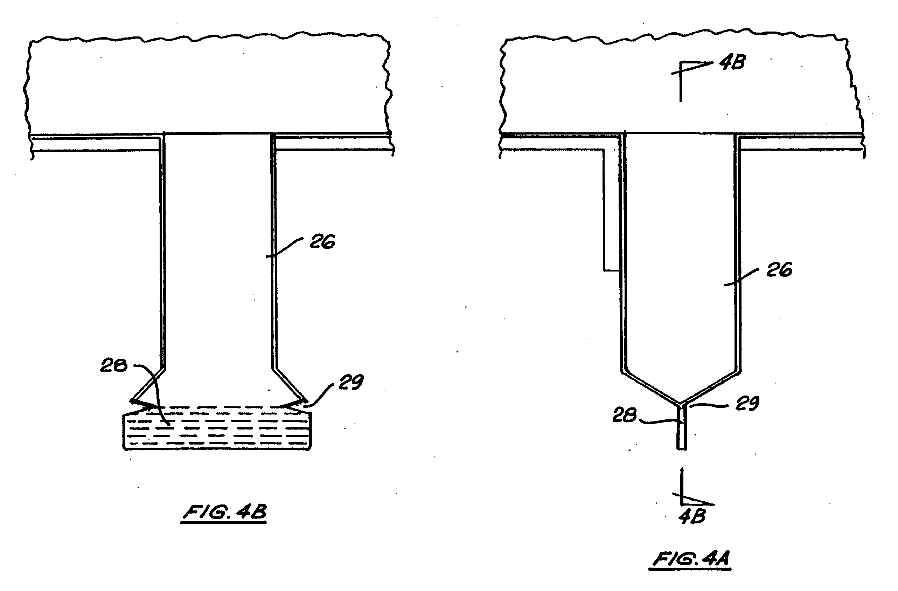

figure 3 illustrates an additional apparatus for use in a method embodying the second aspect of the invention;
figures 4a and 4b illustrate a spout having a detachable plastics tab such as may be provided on a laminated tubular body embodying the first aspect of the invention;
figure 5 illustrates a laminated tubular body embodying the first aspect of the invention;
figures 6a and 6b illustrate an additional feature of the laminated tubular body illustrated in figure 4;
figures 6c and 6d illustrate an alternative to the additional feature of figure 6a and 6b;
figure 7 illustrates an industrial plant for the mass production of laminated tubular bodies embodying the first aspect of the invention;
figure 8 illustrates an additional feature of a laminated tubular body embodying the first aspect of the present invention;
figure 9 illustrates a further additional feature of a laminated tubular body embodying the first aspect of the present invention;
figure 10a illustrates an alternative apparatus for use in the method embodying the second aspect of the invention;
figure 10b illustrates some alternative further processing options which may follow the processing applied by the apparatus of figure 10a;
figures 10c and 10d illustrate a portion of an alternative apparatus to that illustrated in figure 10a.

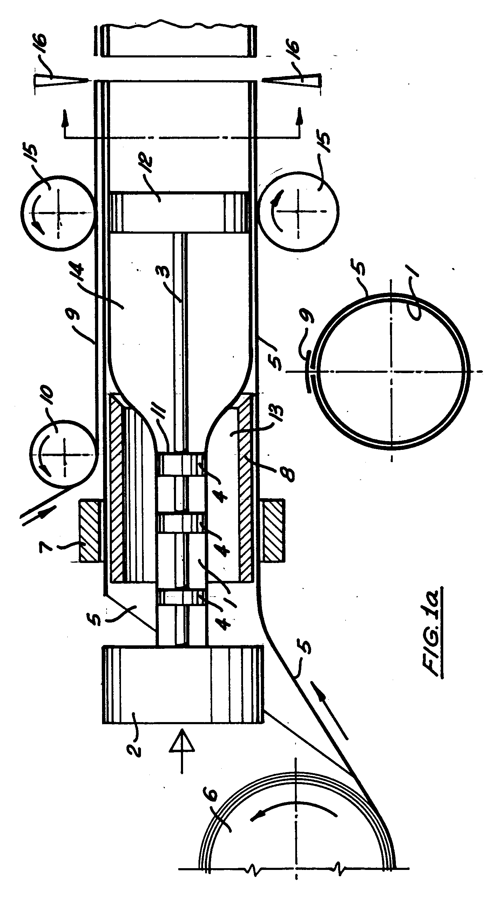

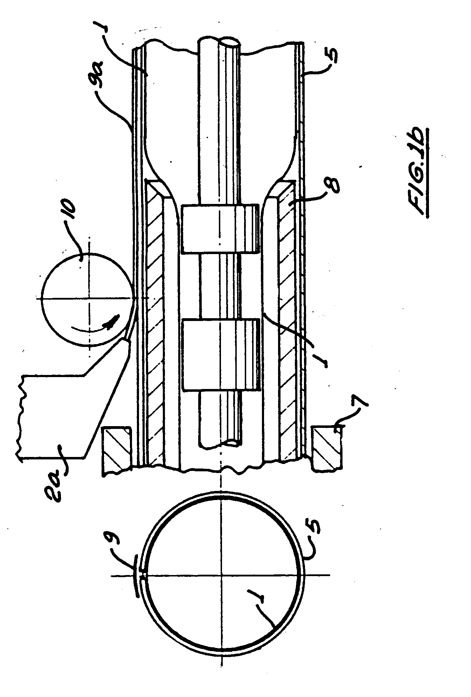

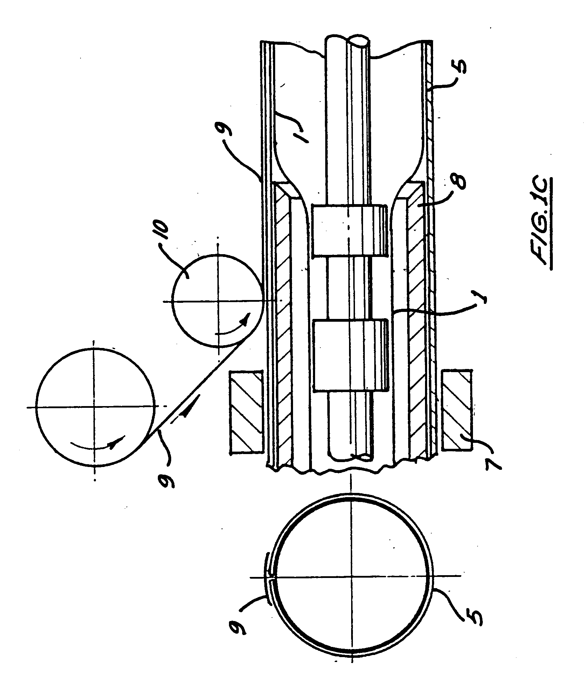

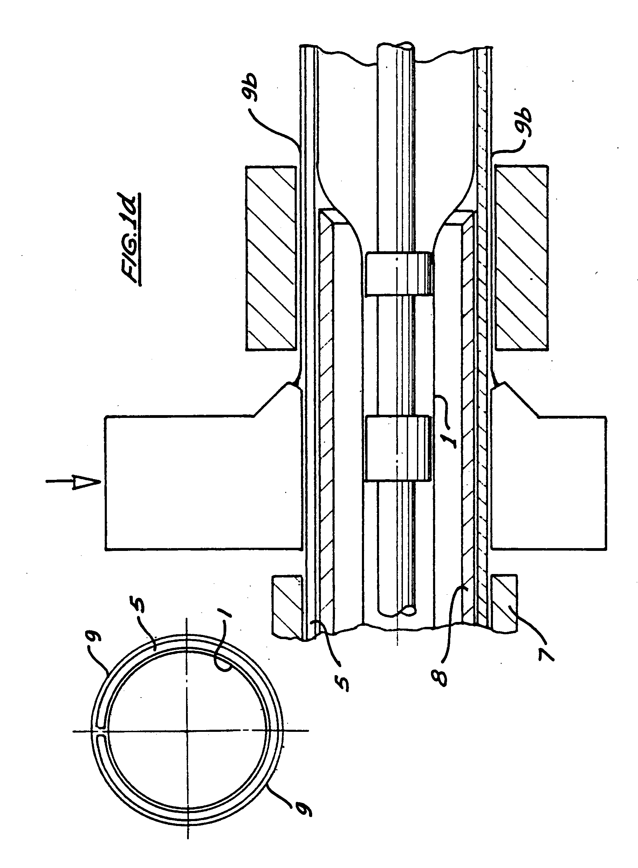

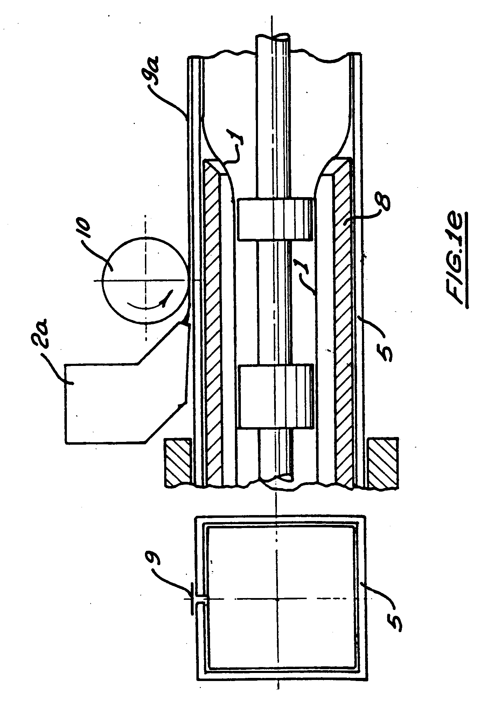

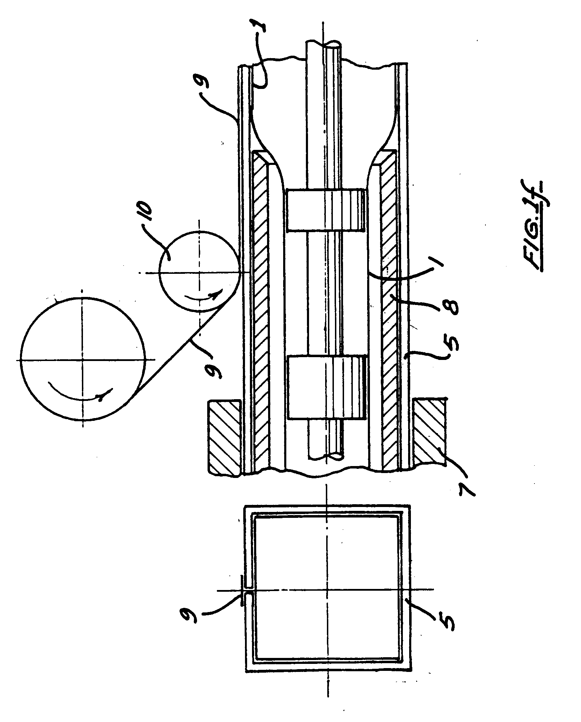

Referring now to figure 1a, a hollow tube-like member 1 is extruded from die 2 and guided over internal mandrel 3 which is provided with cooling rings 4. A flat strip of base material 5 is drawn from a roll 6 and around the extruded member 1 by being passed through the gap between a forming ring 7 and an interior supporting mandrel 8. Die 2 could of course be repositioned at the forward end of mandrel 8 if required. The longitudinal edges of the strip of base material are brought into abutment by this process in order to completely surround the extruded member 1. A strip of adhesive tape 9 is drawn from a supply over roller 10 which presses it over the region on either side of the edges of material 5 which border the abutment. In this way the base material is made into a continuous sleeve surrounding the extruded tube-like member 1.

Nozzles 11 are provided on the third cooling ring of mandrel 3 to pump fluid, preferably air, into the interior of extruded member 1 in order to increase the pressure in area 14 relative to area 13 and inflate member 1. If desired the air may be sterilized, or alternatively another sterile or even inert gas may be used. A final disc 12 is mounted on the end of mandrel 3 some distance beyond the last cooling ring in order to maintain the inflating pressure. Disc 12 may be coated with teflon, or silicon rubber, and may have an adjustable outer diameter, possibly pneumatically controlled, to ensure the correct degree of radial stretching of member 1 is achieved.

Extruded member 1 is inflated until it contacts the inner side of the sleeve of material 5. A connection is provided between sleeve 5 and extruded member 1 by means of welding or gluing; alternatively the natural adhesive properties of material 1 may be utilized to bond the two layers together. Relatively low, or negative, pressure may be applied to area 14 to assist in the inflation of member 1, and to avoid bubbles forming between the layers. Transport rollers 15 react against disc 12 to press the layers together, and exert tension on the layers of the laminated structure to stretch extruded member 1 longitudinally as it is inflated. A cutting device 16 cuts the continuous laminated tube into lengths for further treatment, for instance for making into tubes or containers.

Of course, the connecting material 9 could comprise a bead or strip 9a of plastics material extruded from a nozzle 2a adjacent the seam, as shown in figure 1b.

Alternatively a sleeve 9b of plastics material could be extruded over the entire external area of the base material and then cooled to form a continuous outer envelope, as shown in figure 1d.

It should also be appreciated that the base material 5 may be formed into a body of any desired cross-section and need not be circular as shown, for instance it may be square as shown in figures 1e and 1f, or oblong, or polygonal in cross-section.

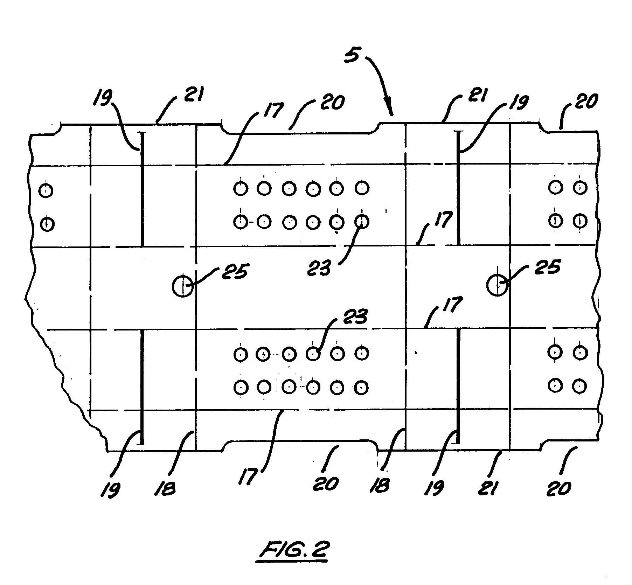

Referring now to figure 2 a strip of base material 5 will be described from which a laminated tubular body of square cross-section embodying the first aspect of the present invention may be produced. The base material 5 is pre-creased longitudinally 17 and transversely 18, or otherwise weakened as necessary for further processing. The base material is also slit 19 at intervals to allow easy separation of the finished laminated tubular bodies; in this case base material 5 is paper. Regions of the paper may be treated with contact adhesive to assist in forming the final articles. Half slots 20 are cut out of the opposing edges 21, such that when the opposing edges are butted together a complete slot 22 appears down each body.

When the opposing edges 21 are butted together a transparent strip of connecting material is pressed along the join in order to connect edges 21 together and form a transparent panel covering slot 22. When the extruded member is subsequently inflated it expands and contacts the inner surfaces of the base material and transparent strip and adheres to them. In this way the seam along the base material is reinforced. The extruded member is made from a transparent material, or at least a material through which some light can pass, in order to provide an inspection window through slot 22. It is not necessary for the inspection window to be completely transparent provided any contents of the body can be perceived through it, for instance in cases where a dark coloured liquid is contained within the tubular body a window of light coloured fairly opaque material would suffice to enable the level of liquid to be discerned.

The inspection window need not, of course, be provided by means only of two half-slots 20 in the butting edges, and could equally well be provided by a complete slot cut into the body of base material 5, or a series of holes. The transparent panel need not serve to strengthen the seam in the formed tubular body, and other seam strengthening means could be employed if the strength of the bond between the inflated extruded member and the butted edges was not sufficient to hold the base material together.

The base material 5 is also penetrated by a pattern of small holes 23, and when the extruded member 1 is inflated it is pushed through holes 23 to form a series of projections 24 on the outer surface of the base material. Projections 24 are useful to provide grip on the outer surface of the final article and may be arranged in a pattern ergonomically designed to assist grip, such as hand-shaped. This is particularly useful for flimsy containers which are filled with heavy liquids, such as milk and fruit juice cartons. It should, of course, be appreciated that this feature is optional.

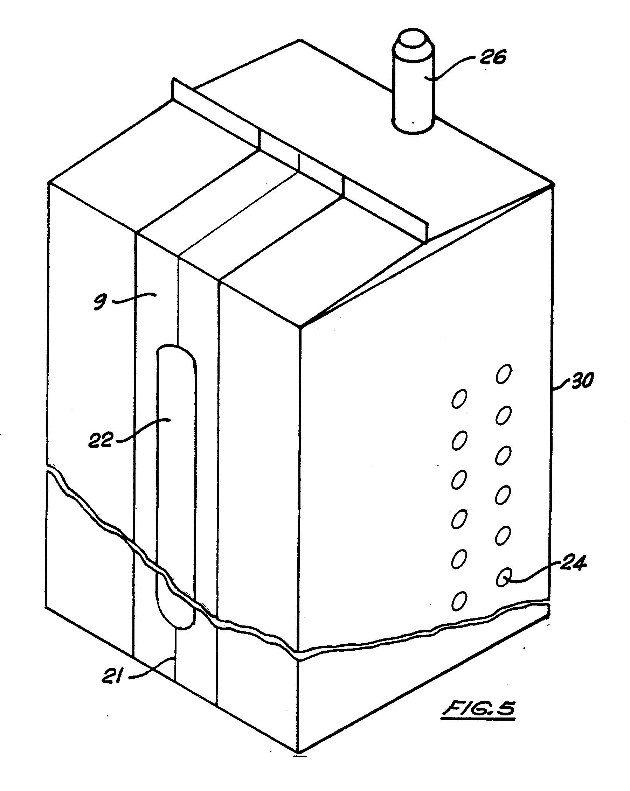

A slightly larger hole 25 is left in the base material 5 so that after it has been connected around the extruded member 1 and member 1 expanded, a spout 26 is formed by the expansion of the material of member 1 through hole 25 in the base material. A former or mould 27 for the spout is drawn alongside the base material, or alternatively is detachably attached at intervals in order to mould the shape of the spout. Relatively low, or negative, pressure may be applied to the distal end of former 27 in order to encourage the extruded material to adopt the shape of the nozzle. A tab 28 of plastics material as shown in figures 4a and 4b may be provided in the mould before the spout is formed such that when the spout is formed it is welded to the plastics tab. The plastics tab 28 being welded to the spout along a line of weakness 29 which allows the tab to be manually detached in order to open the spout.

Once the extruded member has been inflated to its final shape and dimensions the tubular bodies may be separated by cutters 16 prior to further processing, such as folding, sealing top and bottom and filling, to produce a finished article.

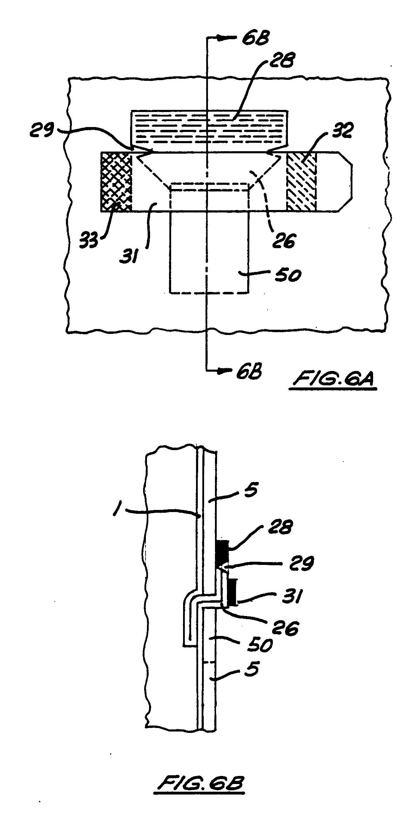

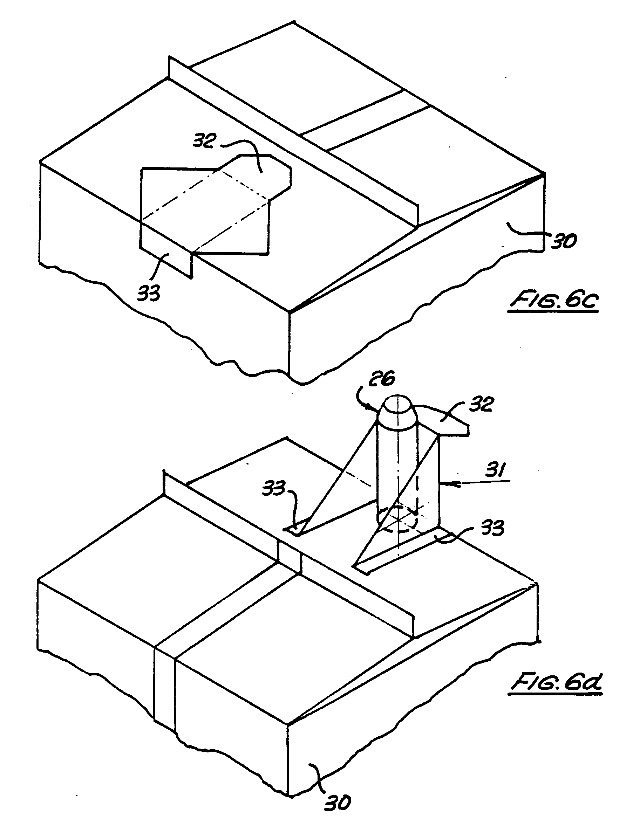

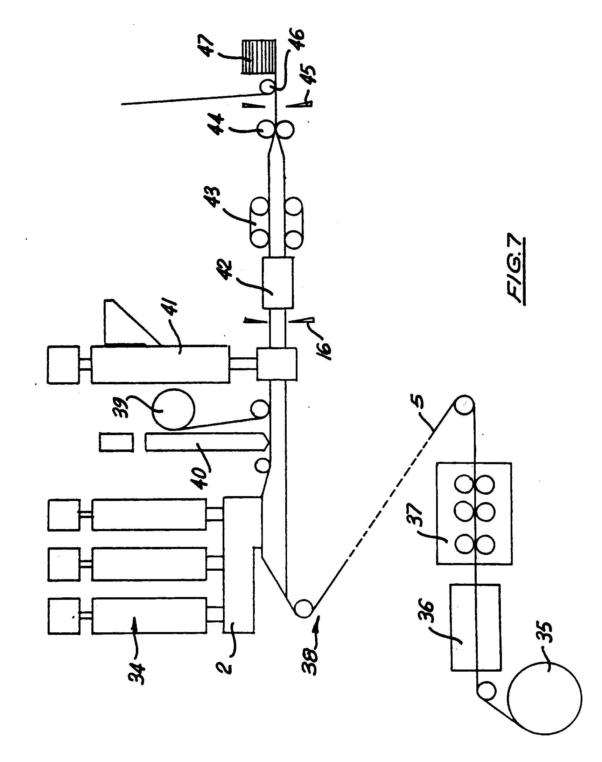

Figure 5 shows a finished article 30 embodying the first aspect of the present invention with an inspection window 22, gripping protuberances 24 and a spout 26. It should be appreciated that spout 26 is collapsible and may be pushed flat against the side of finished article 28 or even inverted into it. It should also be appreciated that the spout is not limited to the form shown, and may be any convenient shape or form. A flap 31 as shown in figures 6a and 6b may be attached over spout 26. Flap 31 is of the kind which can be lifted at one end 32 to allow the contents of the article to be poured out through the spout, and resealed. The other end 33 being permanently secured to the article. Figures 6c and 6d show an alternative flap.

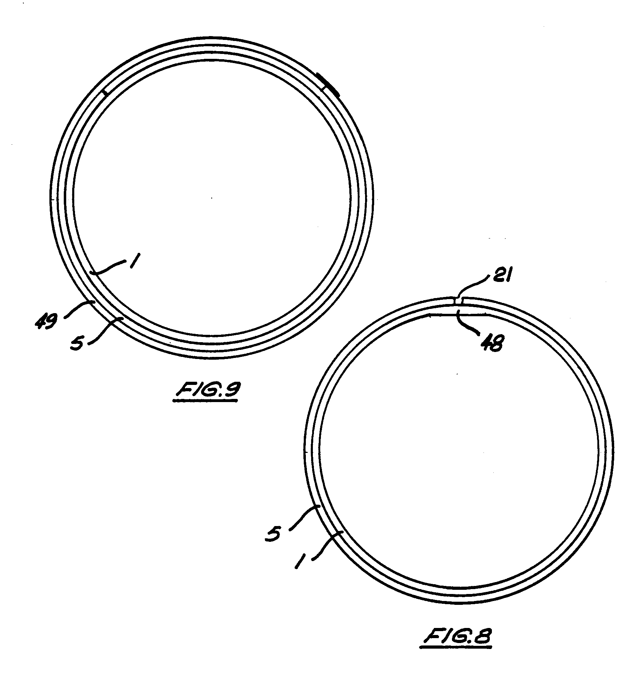

Figure 7 illustrates a typical entire manufacturing plant for articles produced by the invented method. The parts of the plant corresponding to parts shown in previous figures has been allocated corresponding reference numerals. A source of raw materials 34 for the extruded member feeds to the extrusion die 2. Base material 5 originates from a roll 35 which passes through a splicer 36, slitting, cutting, creasing and punching operations 37 and a flame treatment 38 before being formed between forming the ring and mandrel. The base material may also be printed if required. Adhesive tape 9 originates on a roller 39, or alternatively a sealing bead is extruded from extruder 40. Further layers of laminate may be applied, both internally and externally as desired, for instance an external sleeve may be extruded from extruder 41. The laminated bodies are cut into lengths for further processing by cutter 16. Each group of laminated bodies is cooled by cooling ring 42, and transported by caterpillar rollers 43 to be flattened, across diagonally opposite longitudinal edges, between rollers 44 before the tubular bodies are finally separated into individual articles by cutters 45. Application of flaps 29 occurs at stage 46 before the finished articles are stacked in stacks 47. The individual articles may be taken from the stack formed and filled as required

Although the aspects of the invention have been described with reference to specific examples it should be appreciated that many alternatives are possible within the scope of the invention. For instance despite the fact that it is preferred to bring the edges or the sleeve of base material 5 into abutment they may of course be overlapped if desired. A contact adhesive may be provided onto the surface of one of the edges of the material, in this case, in order to provide a secure bond along the seam.

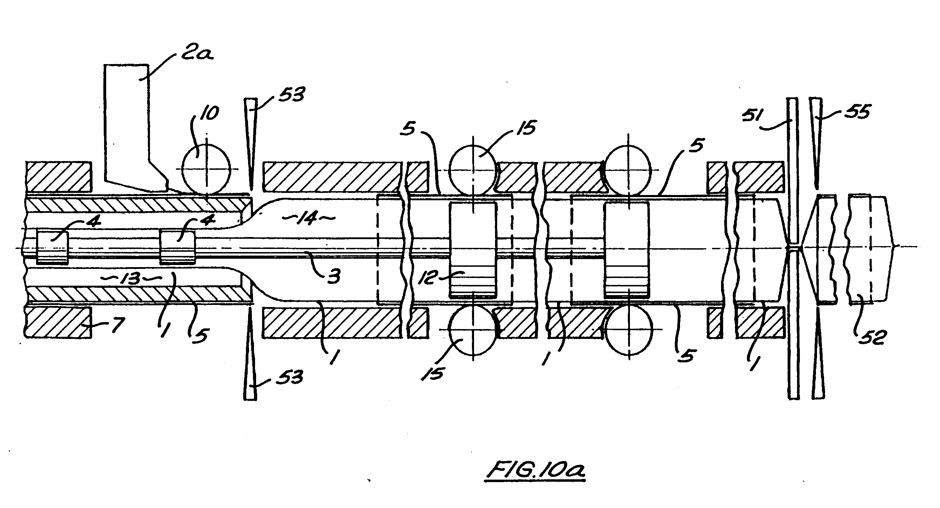

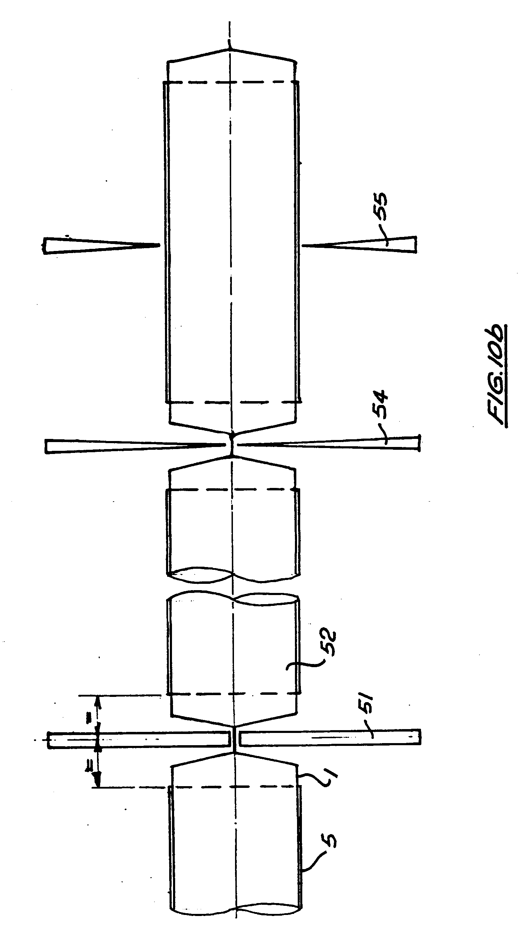

A refinement which is preferred when the edges are brought into abutment is to selectively adjust the local thickness of the extruded inner member in order to make it thicker, and therefore stronger, in the region of the join 48, as shown in figure 8.

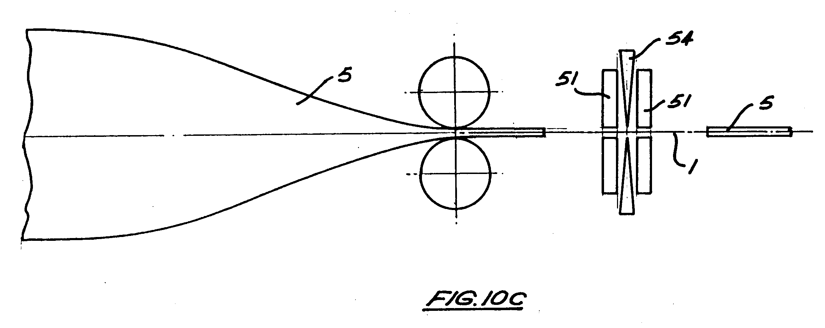

It is also envisaged that the invention could be used as port of a more complex process. For instance a process can be envisaged in which a first sleeve of base material 5 is secured by an inflated inner layer 1 as previously described, and then a second sleeve 49 of base material is drawn around the structure with its seam radially offset from the seam of the first strip of base material, that layer being secured, say, by a strip of tape or extruded bead, see figure 9.

It should also be appreciated that a hollow channel may be incorporated into die 2 and internal mandrel 3 in order to allow the tubular laminated body to be filled as the extruded inner layer is inflated. In this way the risk of contamination of the contents of the tubular bodies can be reduced.

Further, it should be appreciated that a flap 50 of base material as shown in figures 6a and 6b may be associated with the spout aperture to co-operate with flap 31 to close spout 26.

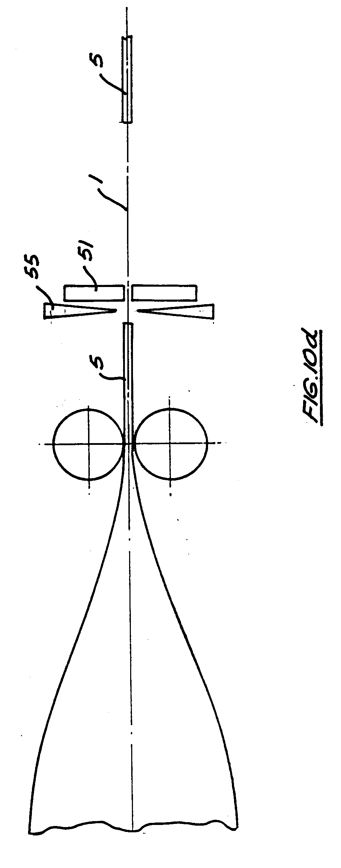

Finally, it should be appreciated that although the invention has been described up to now with reference to a continuous process producing an endless laminated body, the layer of base material 5 could be intermittent leaving portions of the extruded inflated member 1 exposed, as indicated in figures 10a and 10b. The exposed portions could subsequently be gathered and welded by means 51 to form a series of sealed individual containers 52, which could of course have been filled when the extruded members were inflated, or very soon after.

The intermittent supply of base material could originate from a continuous roll and be cut immediately prior to being formed around the extrusion die, for instance by cutters 53.

The individual sealed, and if desired filled, containers may be separated by means of cutters 54 cutting through the gathered weld in order to form individual containers sealed at both ends. Alternatively the containers could be separated in such a way as to be sealed at only one end (say by cutters 55), or to be open at both ends.

Containers which are filled and sealed at both ends have the advantage that the only remaining process step required is to cap the ends of the container with a cap of suitable base material. Even if not filled the sealed containers have the advantage of being crush-proof during further processing and transport as a result of the internal pressure of the inflating fluid.

When containers are being made with a cross-section which can be flattened along pre-formed longitudinal creases and it is not desired to fill the containers immediately, the sealing and parting of the inflated member 1 may be carried out as shown in figure 10c to produce a container body sealed at both ends, or, as shown in figure 10d to produce containers sealed at only one end.

Individual containers produced in this way may of course enjoy any of the features previously described with reference to continuous bodies.

## Claims

1. A method of continuously forming a laminated tubular body including the steps of drawing opposite longitudinal edges (21) of a strip of sheet material (5) into close proximity, joining said longitudinal edges to form a tubular body having an inner surface and an outer surface, extruding a hollow plastics lining member (1) within said tubular body, expanding the hollow lining member within the tubular body to form a substantially continuous lining characterised in that the sheet material is flexible and at least partially resilient and in that external and internal pressure are simultaneously applied to bring the inner lining into sealing engagement with said inner surface, thereby continuously forming a laminated tubular body, and cutting the continuously formed laminated tubular body into preselected lengths.

2. A method according to claim 1 wherein at least said external pressure is applied by pressure roller means including at least one set of pressure rollers (15) circumferentially spaced around the outside of said tubular body.

3. A method according to claim 2 wherein said pressure roller means also exert tension to stretch the lining longitudinally as it is bonded to the tubular body.

4. A method according to claim 1 including the step of forming at least one aperture (22, 23, 25) in said tubular body prior to expanding said lining, such that said lining extends unjoined and unbroken through said at least one aperture to form a sealed protuberance (24) projecting outwardly beyond the outer surface of said tubular body.

5. A method according to claim 1 wherein said hollow lining member is expanded within the tubular body by means of internal fluid pressure.

6. A method according to claim 4 wherein the hollow lining member is expanded so as to extend through said aperture (25) to form a spout (26) defining a channel in fluid communication with the interior of the laminated tubular body.

7. A method according to claim 6 wherein the spout is provided with a closure element in the form of a manually detachable plastics tab (28).

8. A method according to claim 7 including the further step of forming a line of weakness (29) between said spout (26) and said tab (28) to facilitate detachment of the tab.

9. A method according to claim 7 wherein the tab (28) is formed by flattening an end portion of the spout.

10. A method according to claim 4 including the step of forming an array of said sealed protuberances disposed to form a textured gripping surface.

11. A method according to claim 1 including the further step of filling the laminated tubular body through a passage extending through a die from which the plastics lining member is extruded.

12. A method according to claim 1 wherein said hollow lining member (1) is extruded continuously from a die (2), wherein the respective opposite longitudinal edges (21) of a plurality of said strips (5) are drawn into close proximity, wherein said respective opposite longitudinal edges are joined to form a plurality of tubular bodies, wherein said tubular bodies are arranged in spaced apart relationship around the hollow lining member, and wherein said lining member is expanded to form a substantially continuous lining in intimate contact with the inner surface of each said tubular body to form a series of spaced apart laminated tubular bodies joined by intermediate sections of said hollow lining member.

13. A method according to claim 12 including the further step of gathering and sealing said intermediate sections of said lining member to form a series of interconnected individually sealed laminated tubular bodies (52).

14. A method according to claim 13 including the further step of separating each of said interconnected laminated tubular bodies to form corresponding discrete bodies sealed at neither, one, or both ends.

15. A method according to claim 12 wherein said tubular bodies are moved longitudinally at a speed greater than that at which said hollow lining member is extruded thereby progressively to introduce a longitudinal stretch into the lining member.

16. A method according to claim 12 wherein the laminated tubular bodies are filled at the same time or shortly after the hollow lining member is expanded, by means of a filling passage associated with said die.

17. A method according to claim 1 wherein heat is applied to said lining member during expansion thereof to improve adhesion to the inner surface of the tubular body.

18. An apparatus for continuously forming a laminated tubular body, said apparatus including means (7) for drawing opposite longitudinal edges of a strip of sheet material into close proximity, means (10) for joining said longitudinal edges to form a tubular body having an inner surface and an outer surface, a die (2) for extruding a hollow plastics lining member (1) within said tubular body, fluid pressure means (11) for expanding the hollow lining member within the tubular body to form a substantially continuous lining, characterised by pressure roller means (15) for pressing the inner lining into sealing engagement with said inner surface of said flexible and at least partially resilient tubular body, and cutting means (16) for cutting the continuously formed laminated tubular body into preselected lengths.

19. Apparatus according to claim 18 wherein said pressure roller means includes at least one set of pressure rollers (15) circumferentially spaced around the outside of said tubular body.

20. Apparatus according to claim 19 wherein said pressure roller means also exert tension to stretch the lining longitudinally as it is bonded to the tubular body.

21. Apparatus according to claim 18 including means for forming at least one aperture (22, 23, 25) in said tubular body prior to expanding said lining, such that said lining extends unjoined and unbroken through said at least one aperture to form a sealed protuberance (24) projecting outwardly beyond the outer surface of said tubular body.

## Patentansprüche

1. Verfahren zum fortlaufenden Herstellen eines laminierten rohrförmigen Körpers mit den Schritten: Ziehen gegenüberliegender Längskanten (21) eines Streifens aus Bandmaterial (5) in dichte Nähe zueinander, Verbinden der Längskanten, um einen rohrförmigen Körper zu bilden, der eine Innenfläche und eine Außenfläche aufweist, Extrudieren eines hohlen Auskleidungsteils (1) aus Kunststoff in dem rohrförmigen Körper, Weiten des hohlen Auskleidungsteils in dem rohrförmigen Körper, um eine im wesentlichen durchgehende Auskleidung zu bilden,
dadurch **gekennzeichnet,** daß
das Bandmaterial biegsam und zumindest teilweise federnd ist, und daß äußerer und innerer Druck gleichzeitig ausgeübt werden, um die innere Auskleidung in dichten Eingriff mit der Innenfläche zu bringen, wodurch fortlaufend ein laminierter rohrförmiger Körper gebildet wird, und daß der fortlaufend gebildete laminierte rohrförmige Körper auf vorgewählte Längen geschnitten wird.

2. Verfahren nach Anspruch 1, bei dem wenigstens der Außendruck durch eine Druckrollenanordnung ausgeübt wird, die wenigstens einen Satz Druckrollen (15) umfaßt, die rings um die Außenseite des rohrförmigen Körpers in Umfangsabständen angeordnet werden.

3. Verfahren nach Anspruch 2, bei dem die Druckrollenanordnung auch eine Spannung ausübt, um die Auskleidung in Längsrichtung zu dehnen, während sie an dem rohrförmigen Körper zum Anhaften gebracht wird.

4. Verfahren nach Anspruch 1, das den Schritt umfaßt, wenigstens eine Öffnung (22, 23, 25) in dem rohrförmigen Körper vor dem Weiten der Auskleidung so auszuformen, daß die Auskleidung unverbunden und ungebrochen durch diese wenigstens eine Öffnung herausragt, um eine abgedichtete Ausstülpung (24) zu bilden, die nach außen über die Außenfläche des rohrförmigen Körpers hinaus vorsteht.

5. Verfahren nach Anspruch 1, bei dem das hohle Auskleidungsteil in dem rohrförmigen Körper mittels eines inneren Fluiddruckes ausgedehnt wird.

6. Verfahren nach Anspruch 4, bei dem das hohle Auskleidungsteil so geweitet wird, daß es durch die Öffnung (25) hinausragt, um eine Tülle (26) zu bilden, die einen in Fluidverbindung mit dem Inneren des laminierten rohrförmigen Körpers stehenden Kanal definiert.

7. Verfahren nach Anspruch 6, bei dem die Tülle mit einem Verschlußelement in Gestalt eines von Hand entfernbaren Kunststofflappens (28) versehen ist.

8. Verfahren nach Anspruch 7, das den weiteren Schritt umfaßt, eine Schwächungslinie (29) zwischen der Tülle (26) und dem Lappen (28) auszubilden, um das Entfernen des Lappens zu erleichtern.

9. Verfahren nach Anspruch 7, bei dem der Lappen (28) durch Abflachen eines Endabschnittes der Tülle gebildet ist.

10. Verfahren nach Anspruch 4, das den Schritt umfaßt, ein Feld von abgedichteten Ausstülpungen auszubilden, die so angeordnet sind, daß sie eine texturierte Greifoberfläche bilden.

11. Verfahren nach Anspruch 1, das den weiteren Schritt umfaßt, den laminierten rohrförmigen Körper durch einen Durchlaß zu füllen, der sich durch ein Formwerkzeug erstreckt, aus der das Kunststoff-Auskleidungsteil extrudiert wird.

12. Verfahren nach Anspruch 1, bei dem das hohle Auskleidungsteil (1) fortlaufend aus einem Formwerkzeug (2) extrudiert wird, bei dem die jeweiligen einanander gegenüberliegenden Längskanten (21) einer Vielzahl der Streifen (5) in dichte Nähe zueinander gezogen werden, bei dem die jeweiligen einander gegenüberliegenden Längskanten miteinander verbunden werden, um eine Vielzahl von rohrförmigen Körpern zu bilden, bei dem die rohrförmigen Körper in Abständen voneinander um das hohle Auskleidungsteil angeordnet werden, und bei dem das Auskleidungsteil geweitet wird, um eine im wesentlichen fortlaufende Auskleidung in innigem Kontakt mit der Innenfläche jedes rohrförmigen Körpers zu bilden, um eine Reihe von zueinander beabstandeten laminierten rohrförmigen Körpern zu bilden, die durch dazwischenliegende Abschnitte des hohlen Auskleidungsteils miteinander verbunden sind.

13. Verfahren nach Anspruch 12, das den weiteren Schritt umfaßt, die dazwischenliegenden Abschnitte des Auskleidungsteils zusammenzubringen und abzudichten, um eine Reihe miteinander verbundener einzeln abgedichteter laminierter Körper (52) zu bilden.

14. Verfahren nach Anspruch 13, das den weiteren Schritt umfaßt, die miteinander verbundenen laminierten rohrförmigen Körper voneinander zu trennen, um entsprechende einzelne Körper zu bilden, die entweder an keinem, einem oder beiden Enden miteinander abgedichtet sind.

15. Verfahren nach Anspruch 12, bei dem die rohrförmigen Körper in Längsrichtung mit einer größeren Geschwindigkeit bewegt werden, als das hohle Auskleidungsteil extrudiert wird, um so fortlaufend in das Auskleidungsteil eine Längsdehnung einzubringen.

16. Verfahren nach Anspruch 12, bei dem die laminierten rohrförmigen Körper zur gleichen Zeit oder kurz nachdem das hohle Auskleidungsteil geweitet wird, mittels eines Füllkanals gefüllt werden, der mit dem Formwerkzeug verbunden ist.

17. Verfahren nach Anspruch 1, bei dem auf das Auskleidungsteil während dessen Weitung Wärme ausgeübt wird, um die Haftung an der Innenfläche des rohrförmigen Körpers zu verbessern.

18. Vorrichtung zum fortlaufenden Herstellen eines laminierten rohrförmigen Körpers, wobei die Vorrichtung Mittel (7) zum Ziehen gegenüberliegender Längskanten (21) eines Streifens aus Bandmaterial (5) in dichte Nähe zueinander, Mittel (10) zum Verbinden der Längskanten, um einen rohrförmigen Körper zu bilden, der eine Innenfläche und eine Außenfläche aufweist, ein Formwerkzeug (2) zum Extrudieren eines hohlen Kunststoff-Auskleidungsteils (1) in dem rohrförmigen Körper, Fluid-Druckmittel (11) zum Weiten des hohlen Auskleidungsteils in dem rohrförmigen Körper, um eine im wesentlichen durchgehende Auskleidung zu bilden, umfaßt,
**gekennzeichnet,** durch eine Druckrollenanordnung (15), um die innere Auskleidung in dichten Eingriff mit der Innenfläche des biegsamen und zumindest teilweise federnden rohrförmigen Körpers zu bringen, und eine Schneidevorrichtung (16), um den fortlaufend gebildeten laminierten rohrförmigen Körper in vorgewählte Abschnitte zu schneiden.

19. Vorrichtung nach Anspruch 18, bei dem die Druckrollenanordnung wenigstens einen Satz Druckrollen (15) umfaßt, die rings um die Außenseite des rohrförmigen Körpers in Umfangsabständen angeordnet sind.

20. Vorrichtung nach Anspruch 19, bei dem die Druckrollenanordnung auch eine Spannung ausübt, um die Auskleidung in Längsrichtung zu dehnen, während sie an dem rohrförmigen Körper zum Anhaften gebracht wird.

21. Vorrichtung nach Anspruch 18, die Mittel umfaßt, um wenigstens eine Öffnung (22, 23, 25) in dem rohrförmigen Körper vor dem Weiten der Auskleidung so auszuformen, daß die Auskleidung unverbunden und ungebrochen durch diese wenigstens eine Öffnung herausragt, um eine abgedichtete Ausstülpung (24) zu bilden, die nach außen über die Außenfläche des rohrförmigen Körpers hinaus vorsteht.

## Revendications

1. Procédé de formation en continu d'un corps tubulaire lamifié consistant à tirer les bords longitudinaux opposés (21) d'une bande de matière en feuille (5) pour les amener à proximité immédiate ; réunir lesdits bords longitudinaux pour former un corps tubulaire comportant une surface intérieure et une surface extérieure ; extruder un élément de revêtement en plastique creux (1) à l'intérieur dudit corps tubulaire ; dilater l'élément de revêtement creux à l'intérieur du corps tubulaire pour former un revêtement sensiblement continu, caractérisé en ce que la matière en feuille est souple et au moins partiellement élastique, et en ce que des pressions externe et interne sont appliquées simultanément pour amener le revêtement intérieur en contact étanche avec la surface intérieure, en formant par ce moyen en continu un corps tubulaire lamifié, et en coupant le corps tubulaire lamifié formé en continu à des longueurs prédéterminées.

2. Procédé selon la revendication 1, caractérisé en ce qu'au moins ladite pression externe est appliquée par des moyens de pression comprenant au moins un ensemble de rouleaux de pression (15), espacés dans le sens de la circonférence autour de l'extérieur dudit corps tubulaire.

3. Procédé selon la revendication 2, caractérisé en ce que lesdits moyens de pression exercent également une traction pour étirer longitudinalement le revêtement à mesure qu'il est lié au corps tubulaire.

4. Procédé selon la revendication 1, caractérisé en ce qu'il consiste en outre à former au moins une ouverture (22, 23, 25) dans ledit corps tubulaire avant la dilatation dudit revêtement, de sorte que ce revêtement s'étend d'un seul tenant et sans solution de continuité à travers au moins une ouverture pour former une saillie obturée (24) dépassant vers l'extérieur au-delà de la surface extérieure dudit corps tubulaire.

5. Procédé selon la revendication 1, caractérisé en ce que ledit élément de revêtement creux est dilaté a l'intérieur du corps tubulaire au moyen d'une pression interne de fluide.

6. Procédé selon la revendication 4, caractérisé en ce que l'élément de revêtement creux est dilaté de manière à s'étendre à travers ladite ouverture (25) pour former un bec verseur (26) définissant un canal en communication avec l'intérieur du corps tubulaire lamifié.

7. Procédé selon la revendication 6, caractérisé en ce que le bec verseur est pourvu d'un élément d'obturation réalisé sous la forme d'une patte de plastique (28) détachable manuellement.

8. Procédé selon la revendication 7, caractérisé en ce qu'il consiste en outre à former une ligne de faiblesse (29) entre le bec verseur (26) et la patte (28) pour faciliter la découpe de cette patte.

9. Procédé selon la revendication 7, caractérisé en ce que la patte (28) est formée par aplatissement de la partie extrème du bec verseur.

10. Procédé selon la revendication 4, caractérisé en ce qu'il consiste en outre à former un réseau de saillies obturées disposées pour former une surface de préhension rugueuse.

11. Procédé selon la revendication 1, caractérisé en ce qu'il consiste en outre à remplir le corps tubulaire lamifié par un conduit s'étendant à travers une filière, à partir de laquelle l'élément de revêtement en plastique est extrudé.

12. Procédé selon la revendication 1, caractérisé en ce que ledit élément de revêtement creux (1) est extrudé en continu à partir d'une filière (2), en ce que les bords longitudinaux opposés respectifs (21) d'une pluralité de dites bandes (5) sont amenés par traction à proximité immédiate, en ce que lesdits bords longitudinaux opposés respectifs sont liés pour former une pluralité de corps tubulaires, en ce que lesdits corps tubulaires sont espacés les uns des autres autour de l'élément de revêtement creux, et en ce que ledit élément de revêtement est dilaté pour former un revêtement sensiblement continu en contact intime avec la surface intérieure de chacun desdits corps tubulaires pour former une série de corps tubulaires lamifiés espacés reliés par des sections intermédiaires dudit élément de revêtement creux.

13. Procédé selon la revendication 12, caractérisé en ce qu'il consiste en outre à assembler et obturer lesdites sections intermédiaires de l'élément de revêtement pour former une série de corps tubulaires lamifiés (52) interconnectés, obturés individuellement.

14. Procédé selon la revendication 13, caractérisé en ce qu'il consiste en outre à séparer chacun desdits corps tubulaires lamifiés interconnectés pour former des corps individuels correspondants qui ne sont obturés à aucune des deux extrémités.

15. Procédé selon la revendication 12, caractérisé en ce que lesdits corps tubulaires sont déplacés longitudinalement à une vitesse plus grande que celle à laquelle ledit élément de revêtement creux est extrudé pour introduire progressivement par ce moyen une contrainte longitudinale dans l'élément de revêtement.

16. Procédé selon la revendication 12, caractérisé en ce que les corps tubulaires lamifiés sont remplis en même temps, ou peu après que l'élément de revêtement creux ait été dilaté, au moyen d'un conduit de remplissage associé avec ladite filière.

17. Procédé selon la revendication 1, caractérisé en ce que de la chaleur est appliquée audit élément de revêtement pendant sa dilation pour améliorer l'adhérence à la surface intérieure du corps tubulaire.

18. Appareil pour la formation en continu d'un corps tubulaire lamifié, comprenant des moyens (7) pour amener, à proximité immédiate, par traction, les bords longitudinaux opposés d'une bande de matière en feuille, des moyens (10) pour relier lesdits bords longitudinaux afin de former un corps tubulaire comportant une surface intérieure et une surface extérieure, une filière (2) pour extruder un élément de revêtement creux (1) réalisé en plastique à l'intérieur dudit corps tubulaire, des moyens de fluide sous pression (11) pour dilater l'élément de revêtement creux à l'intérieur du corps tubulaire pour former un revêtement sensiblement continu, caractérisé en ce qu'il comporte des moyens de pression (15) à rouleaux pour appliquer le revêtement intérieur en contact étanche avec ladite surface intérieure dudit corps tubulaire souple et au moins partiellement élastique, et des moyens de coupe (16) pour couper le corps tubulaire lamifié formé en continu à des longueurs prédéterminées.

19. Appareil selon la revendication 18, caractérisé en ce que lesdits moyens de pression à rouleaux comprennent au moins un ensemble de rouleaux (15), espacés dans le sens de la circonférence autour de l'extérieur dudit corps tubulaire.

20. Appareil selon la revendication 19, caractérisé en ce que lesdits moyens de rouleaux à pression exercent également une traction pour étirer longitudinalement le revêtement à mesure qu'il est lié au corps tubulaire.

21. Appareil selon la revendication 18, caractérisé en ce qu'il comprend des moyens pour former au moins une ouverture (22, 23, 25) dans ledit corps tubulaire avant la dilatation dudit revêtement, de sorte que ce revêtement s'étend d'un seul tenant et sans solution de continuité à travers au moins une ouverture pour former une saillie obturée (24) dépassant vers l'extérieur au-delà de la surface extérieure dudit corps tubulaire.
